# EUROPÄISCHE PATENTSCHRIFT

(11) **EP 2 240 810 B1**
(45) Veröffentlichungstag und Bekanntmachung des Hinweises auf die Patenterteilung: **28.09.2011**
(21) Anmeldenummer: 09707342.3
(22) Anmeldetag: 03.02.2009
(51) Int. Cl.: G02B 21/24

(54) **FEINTRIEB FÜR OBJEKTIVE, INSBESONDERE FÜR MIKROSKOPE**
FINE DRIVE FOR OBJECTIVES, IN PARTICULAR FOR MICROSCOPES
MÉCANISME DE RÉGLAGE FIN POUR OBJECTIFS, EN PARTICULIER POUR MICROSCOPES

(30) Priorität: 06.02.2008 DE 102008007773
(43) Veröffentlichungstag der Anmeldung: 20.10.2010
(73) Patentinhaber: Carl Zeiss MicroImaging GmbH, 07745 Jena (DE)
(72) Erfinder: TRÖLLSCH, Arne, 23568 Lübeck (DE); WOLLWEBER, Thomas, 06648 Eckartsberga (DE)
(74) Vertreter: Scholze, Humbert
(86) Internationale Anmeldenummer: PCT/EP2009/000676
(87) Internationale Veröffentlichungsnummer: WO 2009/098015

(56) Entgegenhaltungen:
- WO-A-81/00917
- WO-A-2004/077123

## Beschreibung

Die Erfindung betrifft einen Feintrieb für Objektive, insbesondere für Mikroskope zur schnellen Verstellung der Objektive zwecks schneller Fokussierung auf unterschiedliche Ebenen in Richtung der optischen Achse des Aufnahme- oder Beobachtungsstrahlenganges.

Eine solche schnelle Fokussierung auf eng beieinander liegende, unterschiedliche Objektebenen ist z.B. notwendig, wenn Stapelaufnahmen in verschiedenen z-Ebenen, d.h. in Richtung der optischen Achse des Mikroskopstrahlenganges, hergestellt werden sollen, um daraus ein dreidimensionales Modell des Objektes berechnen zu können. Eine solche Stapelaufnahme, bei der die Fokuslage im Objekt oder in der jeweiligen Probe auf wenige Nanometer genau eingestellt werden muss, kann grundsätzlich von einem normalen Z-Trieb des Mikroskops durchgeführt werden, wobei allerdings die Verstellgeschwindigkeit gering ist, da doch erheblich Massen, wie z.B der gesamte Objektivrevolver mit den darin befindlichen Wechselobjektiven, bewegt werden müssen.

Zur schnellen und genauen Objektivpositionierung während der Herstellung der Stapelaufnahmen werden gegenwärtig Piezoantriebe in Form von piezo-getriebenen Aktoren eingesetzt, welche aber gewisse Nachteile aufweisen.

So ist eine piezoelektrisch angetriebene Vorrichtung zur Objektivverstellung bei Mikroskopen bekannt, welche in ein Auge eines Objektivrevolvers eingeschraubt werden kann, wobei aus Platzgründen jedoch benachbarte Augen nicht mit Objektiven bestückt werden können. In diese Vorrichtung wird dann das benötigte Objektiv eingeschraubt. Nachteilig ist dabei, dass sich der Abstand des Objektivs zur Tubuslinse vergrößert und evtl. zu benutzende DIC-Prismen (Digital Interference Contrast-Prismen) nicht mitbewegt werden. Des Weiteren werden für ein Objektiv drei Augen des Revolvers benötigt.

Ferner werden bei einem Piezo-Antrieb verstellbare Scanning-Tische angewendet, bei denen in den Objekttisch ein Tischeinsatz integriert ist und an Stelle des Objektivs das Objekt bewegt wird. Nachteilig ist hierbei, dass bei der Verstellung auftretende unkontrollierbare Schwingungen das Objekt negativ beeinflussen können.

Weiterhin gibt es piezo-getriebene Revolververstellungen, wobei der ganze Revolver mit seiner relativ großen Masse durch einen Piezotrieb verstellt wird. Auch hier können starke Schwingungen während des Scan-Vorganges auftreten. Es ist nur eine geringe Verstellgeschwindigkeit erzielbar.

Es ist aus der DE 103 09 138 A1 2004.09.16 und aus der US 2006/0164721 A1 ist eine Mikroskopvorrichtung mit wechselbaren Objektiven bekannt, die in einer verstellbaren Objektivwechseleinrichtung gelagert ist. Jedes Objektiv ist in dieser Wechseleinrichtung, koaxial zur optischen Achse der Mikroskopvorrichtung verschiebbar, in einer kostenintensiven Führung mit einer hohen Passgenauigkeit angeordnet. Es sind Aktoren bzw. Stellelemente vorgesehen, um das jeweils ausgewählte Objektiv im Strahlengang koaxial zur optischen Achse und relativ zu der Wechseleinrichtung zwecks Fokussierung des Mikroskopobjektivs zu verstellen. Als Stellelemente für die Grobverstellung sind ein Motor und ein Spindelgetriebe und als Stellelemente für die Feinverstellung sind piezokeramische Elemente vorgesehen. Nachteilig ist bei dieser Mikroskopvorrichtung, dass bei einem Objektivwechsel die gesamte Führung heruntergefahren werden muss, um das Objektiv aus der Arbeitsstellung zu bringen und um den Revolver weiterschalten zu können.

So liegt der Erfindung die Aufgabe zu Grunde, einen Feintrieb für Objektive für Mikroskope zu schaffen, mit welchem eine schwingungsarme, schnelle, präzise und hoch genau reproduzierbare Verstellung eines im Strahlengang des Mikroskops befindlichen Objektivs in Richtung der optischen Achse des Mikroskopstrahlenganges realisierbar ist.

Erfindungsgemäß wird diese Aufgabe bei einem nach dem Oberbegriff des Hauptanspruches ausgebildeten Feintrieb mit den im kennzeichnenden Teil dieses Anspruches offenbarten Mitteln gelöst. In den Unteransprüchen sind weitere Ausgestaltungen und Einzelheiten der Erfindung dargelegt.

So ist es vorteilhaft, wenn Gelenkverbindungen für die Lagerung der Objektivübergabeeinheit am Aktuatorgrundkörper vorgesehen sind. So können beispielsweise Federgelenke angeordnet sein.

Eine besonders vorteilhafte Anordnung ergibt sich, wenn die Objektivübergabeeinheit in Festkörperfedergelenken gelagert ist.

So ist es ferner von Vorteil, wenn als Antrieb für den Aktuatorgrundkörper eine Linearantriebsanordnung vorgesehen ist.

Eine präzise Ausführung ergibt sich, wenn an der Objektivübergabeeinheit Mittel (Mitnehmerstifte) vorgesehen sind, welche das jeweilige, in der optischen Achse des Strahlenganges positionierte, gefederte Objektivauge von unten kontaktieren und welche zur Vermeidung von lateralem Spiel und zur Justage mit in den Objektivaugen angeordneten und senkrecht zur optischen Achse wirkenden Federelementen in Wirkverbindung stehen.

Vorteilhaft ist es, wenn als Federelemente Federringe oder Festkörperfedern in den Objektivaugen vorgesehen sind.

Zur hochpräzisen Verstellung der Objektivübergabeeinheit mit dem eingesetzten Objektiv in Richtung der optischen Achse ist mit Vorteil ein piezoelektrischer Antrieb vorgesehen.

Mit der Erfindung wird erreicht, dass mittels einfacher Motoren der Aktuatorgrundkörper um seine Drehachse heruntergeklappt und damit die Objektivübergabeeinheit aus dem jeweiligen Auge herausgeführt werden kann. Bei einem motorischen Objektivrevolver kann dieser Vorgang gleichzeitig zu dem Absenken des kompletten Revolvers erfolgen. Da bei diesem Feintrieb die Objektive in Objektivaugen geschraubt werden, in welche DIC-Prismen eingesetzt werden können, ist bei der Feinfokussierung mittels der Objektivübergabeeinheit die Möglichkeit für DIC-Kontrastaufnahmen in hoher Qualität gegeben. Für eine reproduzierbare Zentrierung des Objektivs kann durch den durch die Federelemente für einen Mitnehmerstift das laterale Spiel beseitigt werden, wodurch eine einfachere Positionierung der Objektivaugen im Objektivrevolver realisierbar ist.

Die Erfindung soll nachstehend an einem Ausführungsbeispiel näher erläutert werden. In der Zeichnung, in welcher in den einzelnen Figuren für funktionsgleiche Elemente und Baugruppen gleiche Bezugszeichen verwendet werden, zeigen
- Fig.1: die Anordnung eines Objektivrevolvers mit Objektivaugen an einem Schlitten,
- Fig.2: den Aktuatorgrundkörper in seiner Arbeitsposition.
- Fig.3: den Aktuatorgrundkörper in einer Position für einen Objektivwechsel und
- Fig.4a bis 4c: das Funktionsprinzip des Aktuators,
- Fig.5a und 5b: jeweils einen federnden Anschlagring für einen Mitnehmerstift der Objektivübergabeeinheit.

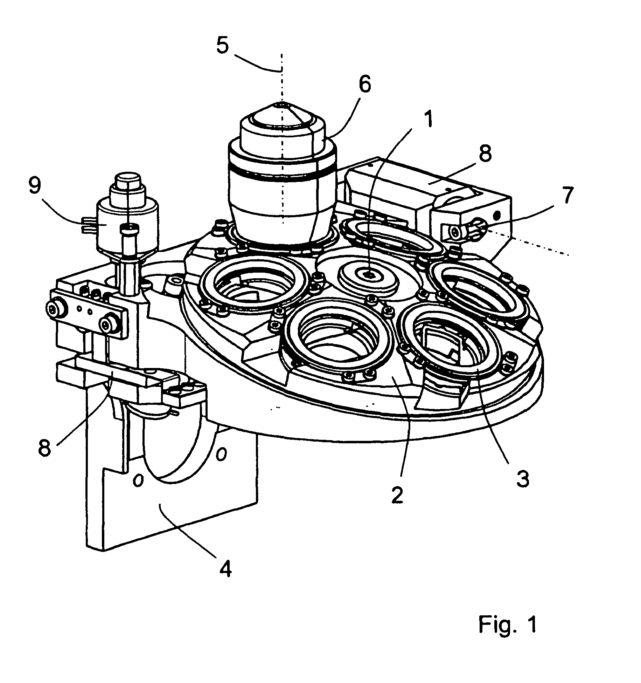

In Fig.1 ist die Anordnung eines um eine Achse 1 drehbaren Objektivrevolvers 2 dargestellt, in welchem federnd gelagerte Objektivaugen 3 vorgesehen sind, wobei der Objektivrevolver 2 an einem Halter 4 angeordnet ist, der mit einem nicht dargestellten, in Richtung der optischen Achse 5 (Z-Richtung) des Mikroskopstrahlenganges verschiebbaren Schlitten des Mikroskops verbunden ist. In die Objektivaugen 3 können unterschiedliche Objektive 6 eingeschraubt werden. An dem Halter 4 ist, um eine orthogonal zur optischen Achse 5 verlaufenden Drehachse 7 schwenkbar gelagert, ein Aktuatorgrundkörper 8 angeordnet, welcher durch einen Antrieb 9 verstellbar ist. Als Antrieb 9 zum Schwenken des Aktuatorgrundkörpers 8 kann ein Gewindetrieb, Zahnrad/Zahnstangentrieb oder ein anderer geeigneter Linearantrieb mit Erfolg eingesetzt werden.

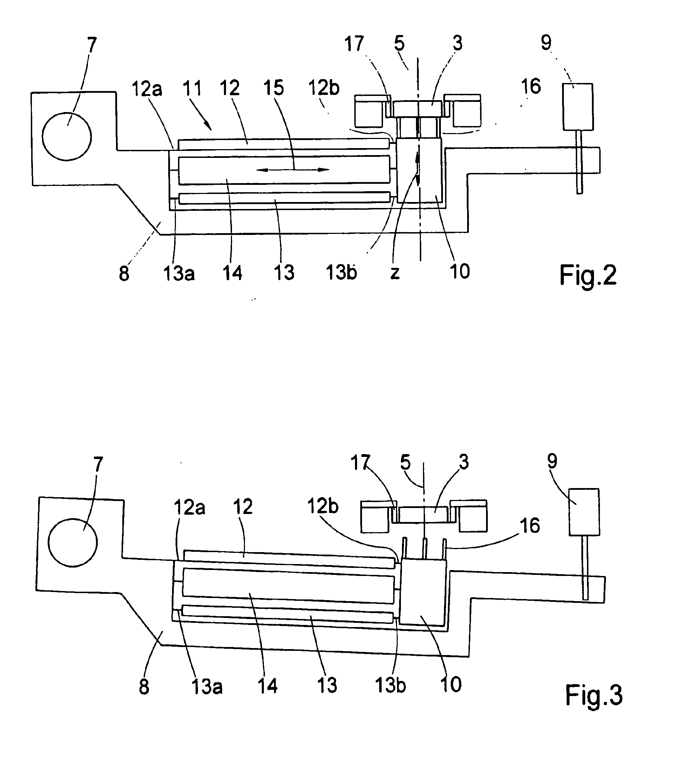

Am Aktuatorgrundkörper 8, welcher in Fig.2 in seiner Arbeitsposition dargestellt ist, ist eine in Richtung der optischen Achse 5 verstellbar gelagerte Objektivübergabeeinheit 10 angeordnet, welche bei einem Wechsel des Objektivs 6 (in Fig.2 nicht dargestellt) durch Verstellen des Aktuatorgrundkörpers 8 in Richtung der optischen Achse 5 aus dem jeweiligen Objektivauge 3 entfernt wird. Damit ist auch eine Drehung der Objektivrevolvers 2 um die Achse 1 und damit eine Weiterschaltung zwecks Einbringung eines anderen Objektivs in die optische Achse 5 möglich. Die Objektivübergabeeinheit 10 ist vorteilhaft an einem Parallelfedergelenk oder an einer Parallelfederführung 11, deren Gelenkverbindungen 12; 13 mit ihren einen Enden 12a; 13a mit dem Aktuatorgrundkörper 8 und mit ihren anderen Enden 12b; 13b mit der Objektivübergabeeinheit 10 verbunden sind, so dass eine Verstellung der Objektivübergabeeinheit 10 in Richtung der optischen Achse 5 (Z-Richtung) ermöglicht ist, was durch den Doppelpfeil in der Fig. 2 veranschaulicht wird. Zur Realisierung der Verstellung der Objektivübergabeeinheit 10 ist ein piezoelektrischer Kristall 14 (Piezokristall) in der Diagonalen der Federführung 11 derart angeordnet, dass bei einer Ausdehnung oder Zusammenziehung des Piezokristalls 14 in Richtung des Pfeils 15 die Verstellung der Objektivübergabeeinheit 10 in Richtung der optischen Achse 5 erfolgt. Der Piezokristall 14 wird in an sich bekannter Weise von einer Ansteuereinrichtung (nicht dargestellt) angesteuert.

Durch die in den Figuren 2 und 3 angedeuteten Längenverhältnisse lässt sich eine Umsetzung der Längenänderung des Piezokristalls 14 in eine Höhenverstellung der Objektivübergabeeinheit 10 und damit der Objektive 6 erreichen.

Durch eine geeignete Ansteuerung des Piezokristalls 14 kann eine Z-Verstellung der Objektivübergabeeinheit 10 und damit des im Objektauge 3 angeordneten Objektivs 6 (in Fig.2 nicht dargestellt) in kleinen und sehr präzisen Stufen erreicht werden, was z.B. für Stapelaufnahmen von mikroskopischen Proben und Objekten notwendig ist. Hierzu greifen in der Objektivübergabeeinheit 10 angeordnete Mitnehmerstifte 16 von unten in das jeweilige, in der optischen Achse 5 des Strahlenganges positionierte Objektivauge 3 ein und kontaktieren entsprechend von unten das dort eingeschraubte Objektiv (in Fig.2 nicht eingezeichnet).

In Fig.3 ist der Aktuatorgrundkörper 8 in einer Position dargestellt, welche er einnimmt, wenn ein Objektivwechsel vorgenommen werden soll. In dieser Position des Aktuatorgrundkörpers 8 ist eine Weiterdrehung des Objektivrevolvers 2 möglich, weil die Objektivübergabeeinheit 10 mit ihren Mitnehmerstiften 16 durch Schwenkung des Aktuatorgrundkörpers 10 aus seiner Arbeitsstellung nach unten aus dem Objektivauge 3 hinausgeführt ist. Die Schwenkung des Aktautorgrundkörpers 8 erfolgt durch den Antrieb 9, welcher an dem der Drehachse 7 gegenüberliegenden Ende des Aktautorgrundkörpers 8 angreift.

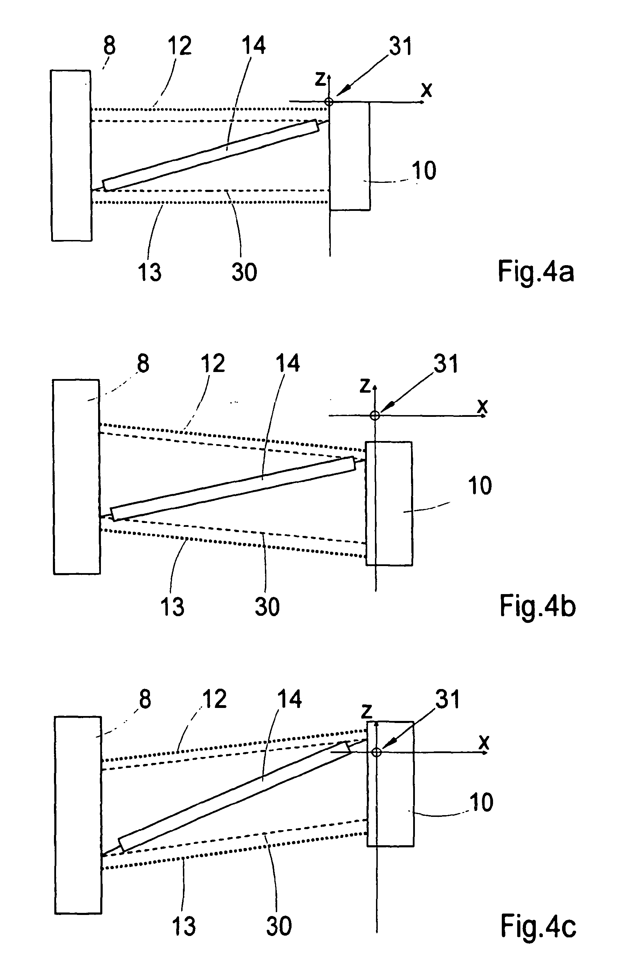

In den Figuren 4a bis 4c ist das Funktionsprinzip des Aktuators dargestellt. Der Aktuatorgrundkörper 8 ist über den Piezokristall 14 und zwei Gelenkverbindungen 12 und 13 mit der Objektivübergabeeinheit 10 verbunden, wobei die Verbindung mit dem Piezokristall 14 zwar drehbar gelagert oder biegbar, aber im Wesentlichen steif ist (z.B. Festkörpergelenk). Auf diese Weise wirkt sich eine Längenänderung des Piezokristalls 14 in einer Höhenänderung der Objektivübergabeeinheit 10 aus. Auch die Gelenkverbindungen 12 und 13 können als Festkörpergelenke ausgeführt sein. Das Übersetzungsverhältnis dieser Bewegung bestimmt sich aus dem Längenverhältnis der Seiten des in den Figuren 3a bis 3c angedeuteten Parallelogramms. Dieses Parallelogramm hat auf Grund der festen Ausführung der Gelenkverbindungen 12 und 13 immer gleiche Seitenlängen. Insbesondere durch die Übersetzung wird eine Vergrößerung des Verstellbereiches für die Objektivübergabeeinheit 10 und einhergehend damit auch eine höhere Verstellgeschwindigkeit erreicht. Ein typisches und auch vorteilhaftes Übersetzungsverhältnis ist zum Beispiel das Verhältnis 1 : 7. Ändert der Piezokristall 14 seine Länge um beispielsweise 100 nm, so ändert sich dann in erster Näherung die Höhe der Objektivübergabeeinheit 10 um 700 nm. Das Übersetzungsverhältnis ist in erster Näherung gleich dem Längenverhältnis der Seiten des Parallelogramms 30.

Fig.4b zeigt den Aktuator bei einem verkürzten Piezokristall 14 und Fig.4c den Aktuator mit einem verlängerten Piezokristall 14. Um den Effekt besser veranschaulichen zu können, sind die Auslenkungen in den Fig.4b und 4c sind nicht im richtigen Maßstab dargestellt. Reale Auslenkungen in der Z-Richtung liegen bei bis zu 300 µm.

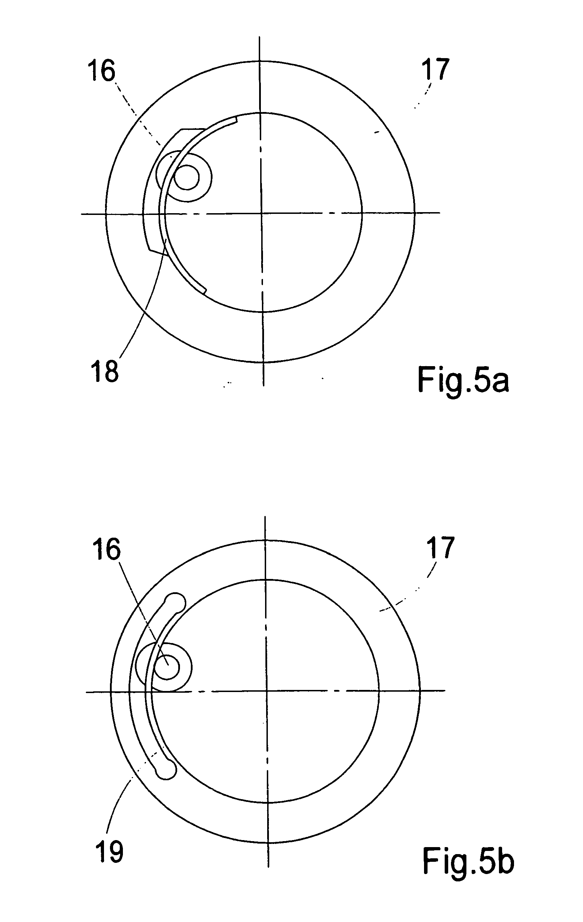

Um fertigungsbedingte Toleranzen, beispielsweise laterales Spiel, zwischen den Mitnehmerstiften 16 und dem Objektivauge 3 auszuschließen und eine Reproduzierbarkeit der lateralen Position nach einem Objektivwechsel zu gewährleisten, ist für die Mitnehmerstifte 16 in den Objektivaugen 3 ein federnder Anschlagring 17 mit einem federnden Bereich für einen der Mitnehmerstifte 16 angeordnet. Ein solcher Anschlagring ist in den Fig.5a und 5b dargestellt. So ist in Fig.5a ein Anschlagring 17 mit einem, mit einem Federelement 18 ausgebildeten federnden Bereich dargestellt, wobei an dem Federelement 18 ein Mitnehmerstift 16 der Objektivübergabeeinheit 10 zur Anlage gebracht ist. Das Federelement 18 kann beispielsweise ein in den Anschlagring 17 eingesetzter Federring oder Federdraht sein.

Fig.5b zeigt einen Anschlagring 17 mit einem federnden Bereich, welcher durch eine, aus dem Material des Anschlagringes 17 herausgearbeitete Festkörperfeder 19 gebildet wird.

### Bezugszeichenliste

- 1: Achse
- 2: Objektivrevolver
- 3: Objektivauge
- 4: Halter
- 5: optische Achse
- 6: Objektiv
- 7: Drehachse
- 8: Aktuatorgrundkörper
- 9: Antrieb
- 10: Objektivübergabeeinheit
- 11: Parallelfederführung
- 12: Gelenkverbindung oben
- 12a,12b: Ende
- 13: Gelenkverbindung unten
- 13a, 13b: Ende
- 14: Piezokristall
- 15: Pfeil
- 16: Mitnehmerstift
- 17: Anschlagring
- 18: Federelement
- 19: Festkörperfeder
- 30: Parallelogramm
- 31: Koordinatensystem (nicht in der Beschreibung genannt, sondern nur in den Fig.4a bis 4c vorhanden)

## Patentansprüche

1. Feintrieb für Objektive, insbesondere für Mikroskope, wobei die Objektive in Objektivaugen eines Objektivrevolvers angeordnet und in den Mikroskopstrahlengang einschaltbar sind und der Objektivrevolver an einem, am Stativ des Mikroskops in Richtung der optischen Achse (Z-Richtung) des Mikroskopstrahlenganges verschiebbar gelagerten Schlitten angeordnet ist,
**dadurch gekennzeichnet,**
- **dass** im Objektivrevolver (2) in Z-Richtung federnd gelagerte Objektivaugen (3) vorgesehen sind, in welche die Objektive (6) eingesetzt sind,
- **dass** am Schlitten ein, um eine orthogonal zur optischen Achse verlaufende Drehachse (7) schwenkbarer Aktuatorgrundkörper (8) vorgesehen ist, welcher durch einen Antrieb (9) verstellbar ist,
- **dass** am Aktuatorgrundkörper (8) eine in Z-Richtung verstellbar gelagerte Objektivübergabeeinheit (10) angeordnet ist, welche in ihrer Arbeitsposition mit dem jeweiligen, in der optischen Achse (5) des Mikroskopstrahlenganges liegenden, gefederten Objektivauge (3) in Wirkverbindung steht,
- und **dass** bei dem Wechsel des Objektivs (6) durch Verstellen des Aktuatorgrundkörpers (8) die Objektivübergabeeinheit (10) aus dem jeweiligen Objektivauge (3) entfernt ist.

2. Feintrieb nach Anspruch 1, **dadurch gekennzeichnet, dass** Federgelenke für die Lagerung der Objektivübergabeeinheit (10) am Aktuatorgrundkörper (8) vorgesehen sind.

3. Feintrieb nach Anspruch 1 oder 2, **dadurch gekennzeichnet, dass** die Objektivübergabeeinheit (10) in einer Gelenkverbindung (12; 13) in Form einer Parallelfederführung, vorzugsweise in einer Festkörperfederführung, gelagert ist.

4. Feintrieb nach Anspruch 1, **dadurch gekennzeichnet, dass** als Antrieb (9) für den Aktuatorgrundkörper (8) eine Linearantriebsanordnung vorgesehen ist.

5. Feintrieb nach einem der vorgehenden Ansprüche, **dadurch gekennzeichnet, dass** an der Objektivübergabeeinheit (10) Mittel (Mitnahmestift 16) vorgesehen sind, welche das jeweilige, in der optischen Achse (5) des Strahlenganges positionierte, gefederte Objektivauge (3) von unten kontaktieren und welche zur Vermeidung von lateralem Spiel und zur Justage mit in den Objektivaugen (3) angeordneten und senkrecht zur optischen Achse (5) wirkenden Federelementen (18) in Wirkverbindung stehen.

6. Feintrieb nach einem der vorgehenden Ansprüche, **dadurch gekennzeichnet, dass** als Federelemente (18) Federringe oder Festkörperfedern (19) in den Objektivaugen (3) vorgesehen sind.

7. Feintrieb nach einem der vorgehenden Ansprüche, **dadurch gekennzeichnet, dass** zur Verstellung der Objektivübergabeeinheit (10) in Z-Richtung ein piezoelektrischer Antrieb vorgesehen ist.

## Claims

1. Fine drive for objectives, more particularly for microscopes, wherein the objectives are arranged in objective eyes of an objective revolver and can be inserted into the microscope beam path, and the objective revolver is arranged on a carriage which is displaceably mounted on the stand of the microscope in the direction of the optical axis (Z-direction) of the microscope beam path, **characterized**
- **in that** objective eyes (3), which are mounted sprung in the Z-direction and into which the objectives (6) are inserted, are provided in the objective revolver (2),
- **in that** provision is made on the carriage for a actuator base body (8), which may be pivoted about a rotational axis (7) running orthogonally to the optical axis and which may be moved by a drive (9),
- **in that** an objective transfer unit (10), which is mounted such that it can be moved in the Z-direction, is arranged on the actuator base body (8), which objective transfer unit is functionally connected in its work position to the respective sprung objective eye (3) that lies in the optical axis (5) of the microscope beam path,
- and **in that** when the objective (6) is changed by moving the actuator base body (8) the objective transfer unit (10) is removed from the respective objective eye (3).

2. Fine drive according to Claim 1, **characterized in that** spring joints are provided for mounting the objective transfer unit (10) on the actuator base body (8).

3. Fine drive according to Claim 1 or 2, **characterized in that** the objective transfer unit (10) is mounted in a spring joint (12; 13) in the form of a parallel-spring guide, preferably in a solid-spring guide.

4. Fine drive according to Claim 1, **characterized in that** a linear-drive arrangement is provided as drive (9) for the actuator base body (8).

5. Fine drive according to one of the preceding claims, **characterized in that** on the objective transfer unit (10) means (drive pin 16) are provided that from below contact the respective sprung objective eye (3) positioned in the optical axis (5) of the beam path and that are functionally connected to spring elements (18) for preventing lateral play and for adjustment purposes, which spring elements are arranged in the objective eyes (3) and act perpendicularly to the optical axis (5).

6. Fine drive according to one of the preceding claims, **characterized in that** spring washers or solid-state springs (19) are provided in the objective eyes (3) as spring elements (18).

7. Fine drive according to one of the preceding claims, **characterized in that** a piezoelectric drive is provided for moving the objective transfer unit (10) in the Z-direction.

## Revendications

1. Mécanisme de réglage fin pour objectifs, en particulier pour microscopes, dans lequel les objectifs sont disposés dans des oeillets d'objectifs d'une tourelle d'objectifs et peuvent être insérés dans le chemin de faisceau du microscope et la tourelle d'objectifs est disposée sur un chariot coulissant sur le pied du microscope dans la direction de l'axe optique (direction Z) du chemin de faisceau du microscope,
**caractérisé en ce que**
- les objectifs (6) sont insérés dans des oeillets d'objectifs (3) reposant dans la tourelle d'objectifs (2) de manière élastique dans la direction Z,
- une embase d'actionneur (8) pivotant autour d'un axe de rotation (7) orthogonal à l'axe optique, prévu sur le chariot, est réglable au moyen d'une commande (9),
- une unité de transfert d'objectif (10) réglable en Z est disposée sur l'embase de l'actionneur (8) et, en position de fonctionnement, elle se trouve en liaison active avec l'oeillet d'objectif élastique respectif (3) situé dans l'axe optique (5) du chemin de faisceau du microscope,
- et que lors du changement de l'objectif (6), l'unité de transfert d'objectif (10) est retirée de l'oeillet d'objectif respectif (3) par déplacement de l'embase de l'actionneur (8).

2. Mécanisme de réglage fin selon la revendication 1, **caractérisé en ce que** des articulations élastiques sont prévues pour faire reposer l'unité de transfert d'objectif (10) sur l'embase de l'actionneur (8).

3. Mécanisme de réglage fin selon la revendication 1 ou 2, **caractérisé en ce que** l'unité de transfert d'objectif (10) repose avec une liaison articulée (12 ; 13) sous la forme d'un guidage élastique parallèle, de préférence d'un guidage élastique à corps solide.

4. Mécanisme de réglage fin selon la revendication 1, **caractérisé en ce qu'**un mécanisme de commande linéaire est prévu pour la commande (9) de l'embase de l'actionneur (8).

5. Mécanisme de réglage fin selon une des revendications précédentes, **caractérisé en ce que** des moyens (tiges d'entraînement 16) sont prévus sur l'unité de transfert d'objectif (10) pour assurer le contact par dessous avec l'oeillet d'objectif élastique respectif (3) placé dans l'axe optique (5) du chemin de faisceau et qui sont en liaison active avec des éléments élastiques (18) disposés dans les oeillets d'objectifs (3) et agissant perpendiculairement à l'axe optique (5) pour éviter le jeu latéral et pour l'ajustement.

6. Mécanisme de réglage fin selon une des revendications précédentes, **caractérisé en ce que** des bagues élastiques ou des éléments élastiques de corps solides (19) sont prévus comme éléments élastiques (18) dans les oeillets d'objectifs (3).

7. Mécanisme de réglage fin selon une des revendications précédentes, **caractérisé en ce qu'**une commande piézoélectrique est prévu pour le réglage de l'unité de transfert d'objectif (10) dans la direction Z.
